# EUROPEAN PATENT SPECIFICATION

(11) **EP 1 586 248 B1**
(45) Date of publication and mention of the grant of the patent: **27.06.2007**
(21) Application number: 05006151.4
(22) Date of filing: 21.03.2005
(51) Int. Cl.: A43B 13/12, A43B 7/12, A43B 13/16, B29D 31/518, A43B 13/18

(54) **Sole for shoes**
Schuhsohle
Semelle pour chaussure

(30) Priority: 16.04.2004 IT VR20040062
(43) Date of publication of application: 19.10.2005
(73) Proprietor: Calzaturificio Monterosa S.p.A., 37012 Bussolengo VR (IT)
(72) Inventor: Gerlin, Stefano, 31053 Pieve di Soligo (Treviso) (IT)
(74) Representative: Ponchiroli, Simone

(56) References cited:
- EP-A- 0 853 896
- EP-A- 1 197 158
- WO-A-20/04002729
- DE-U1-9202004 008 53
- US-A- 4 398 357
- US-A- 5 983 524
- US-A1- 2002 100 187
- US-A1- 2004 074 107

## Description

The present invention relates to a sole for shoes.

As is known, soles adapted to allow better comfort and relief in walking are manufactured in the field of shoes. Among some of the known solutions, mention can be made for example of the manufacture of soles that have microperforations that are a direct component of the structure that constitutes the sole and on which breathable insoles rest. These solutions accordingly suffer particular manufacturing difficulties, with high costs and in many cases with a reduced flexibility of the sole.

From patent US 2002/100187, it is also known a shoe which has a sole base body with one cutout that is closed partially by one multilayer sheet-like insert. The insert has, in its lower part intended to be directed toward the ground, a layer made of rubber-like material, which is injection molded directly onto the remaining part of said multilayer sheet-like insert, and comprises at least one through opening. The insert further comprises one mechanical protection layer and one layer made of a water-repellent breathable membrane.

The aim of the present invention is to eliminate the drawbacks noted above by providing a sole for shoes that thanks to its particular constructive characteristics is more elastic and flexible, so as to allow easy and comfortable walking.

Within this aim, an important object of the present invention is to provide a sole for shoes that can ensure excellent waterproofing.

Another object of the present invention is to provide a sole for shoes that can be manufactured with reduced manufacturing costs, so as to be competitive also from a merely economical standpoint.

This aim and these and other objects that will become better apparent hereinafter are achieved by the sole for shoes according to claim 1.

Further characteristics and advantages of the invention will become better apparent from the description of some preferred but not exclusive embodiments of the sole for shoes according to the invention, illustrated by way of non-limiting example in the accompanying drawings, wherein:
Figure 1 is a schematic perspective top view of the sole for shoes according to the invention;
Figure 2 is an exploded perspective view of the two parts that constitute the sole;

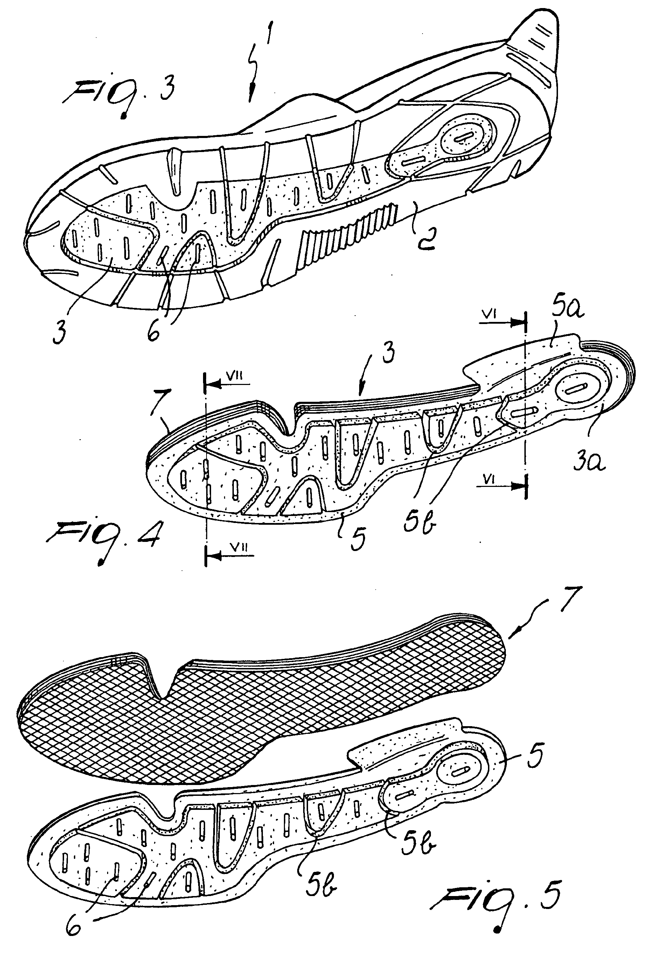

Figure 3 is a bottom perspective view of the sole according to the invention;

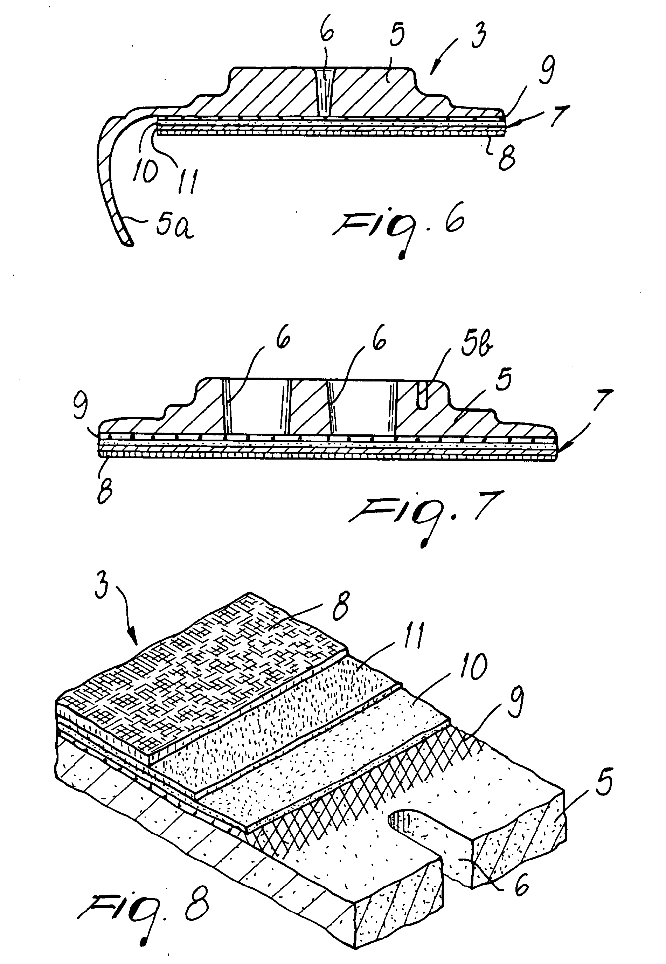

Figure 4 is a bottom perspective view of the multilayer sheet-like insert;
Figure 5 is an exploded bottom perspective view of the multilayer sheet-like insert;
Figure 6 is a sectional view, taken along the line VI-VI of Figure 4;
Figure 7 is an enlarged-scale sectional view, taken along the line VII-VII of Figure 4;
Figure 8 is a partially cutout view of the multilayer sheet-like insert;
Figure 9 is an exploded perspective view of a second embodiment of the sole according to the invention;
Figure 10 is a top perspective view of the sole base body according to the second embodiment of Figure 9;

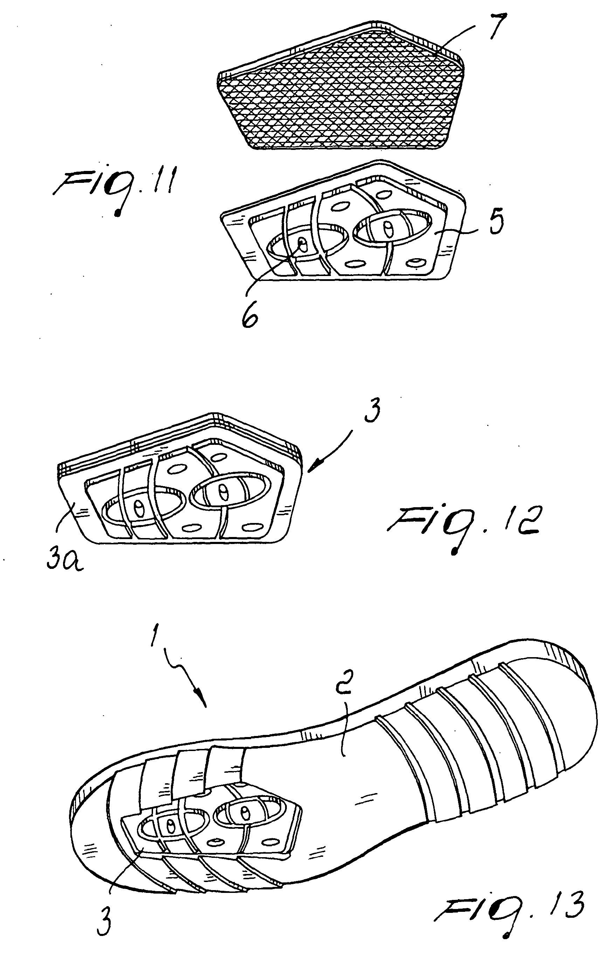

Figure 11 is an exploded bottom perspective view of the multilayer sheet-like insert again according to the second embodiment of Figure 9;
Figure 12 is a bottom perspective view of the multilayer sheet-like insert of Figure 11 according to the second embodiment of Figure 9;
Figure 13 is a bottom perspective view of the second embodiment of Figure 9;
Figure 14 is an exploded bottom perspective view of a third embodiment of the invention;
Figure 15 is a bottom view of the third embodiment of Figure 14;
Figure 16 is an exploded perspective view of a fourth embodiment of the invention;
Figure 17 is a bottom view of the embodiment of Figure 16.

In the examples of embodiments that follow, individual characteristics, given in relation to specific examples, may actually be interchanged with other different characteristics that exist in other examples of embodiments.

Moreover, it is noted that anything found to be already known during the patenting process is understood not to be claimed and to be the subject of a disclaimer.

With reference to the figures, the sole for shoes according to the invention, generally designated by the reference numeral 1, generally comprises a base body 2 of the sole and at least one multilayer insert 3.

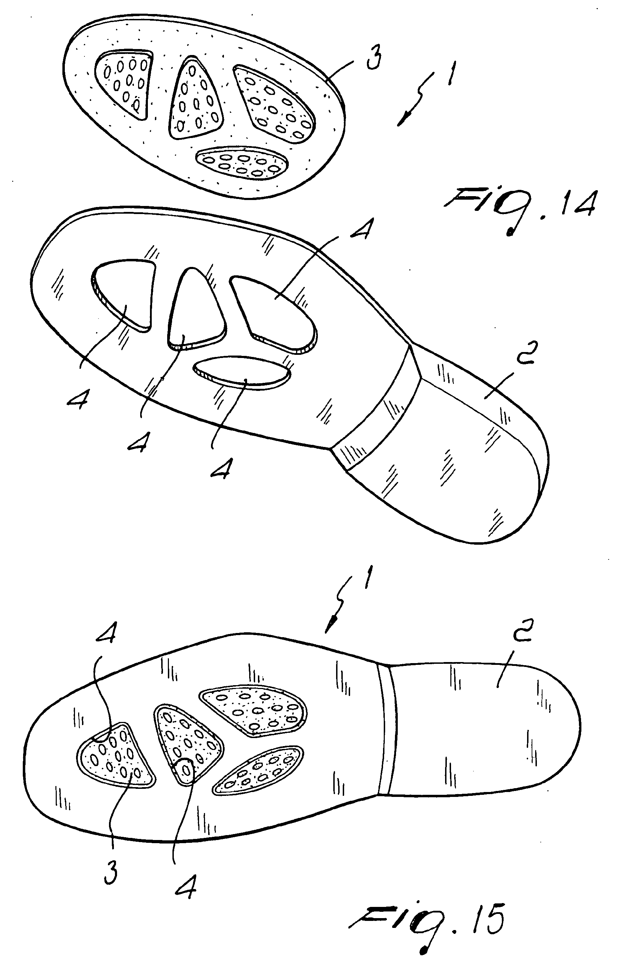

It should be noted that the base body 2 of the sole can be conveniently made of die-cast material or of any other suitable material, both natural, such as for example leather (as in the embodiment illustrated merely by way of example in Figures 14 and 15), and synthetic.

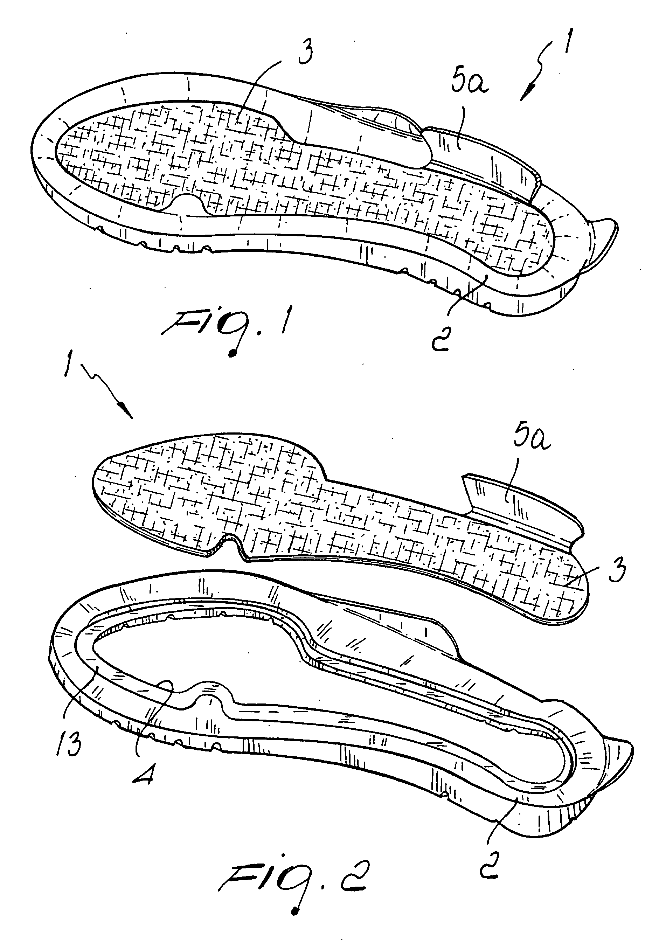

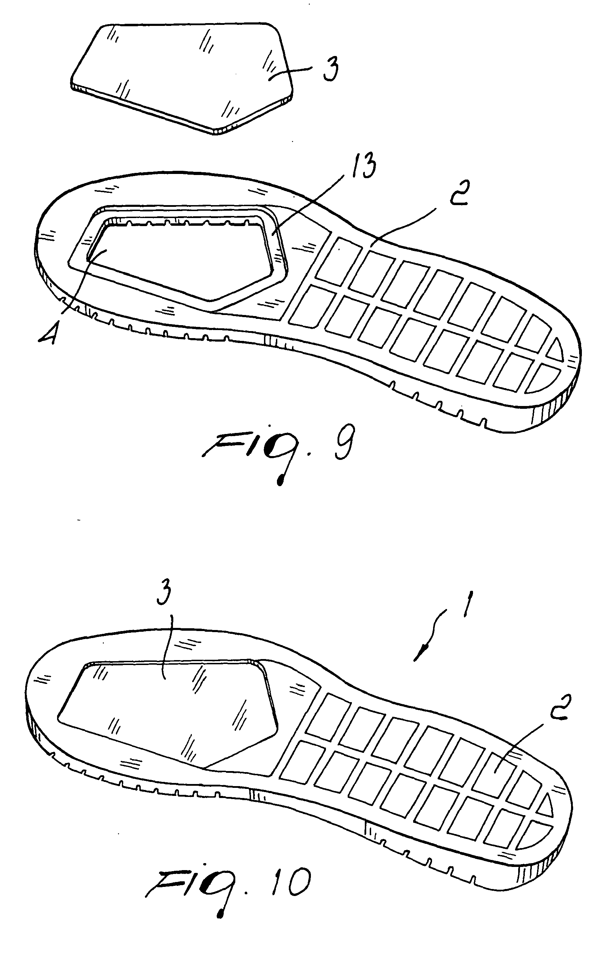

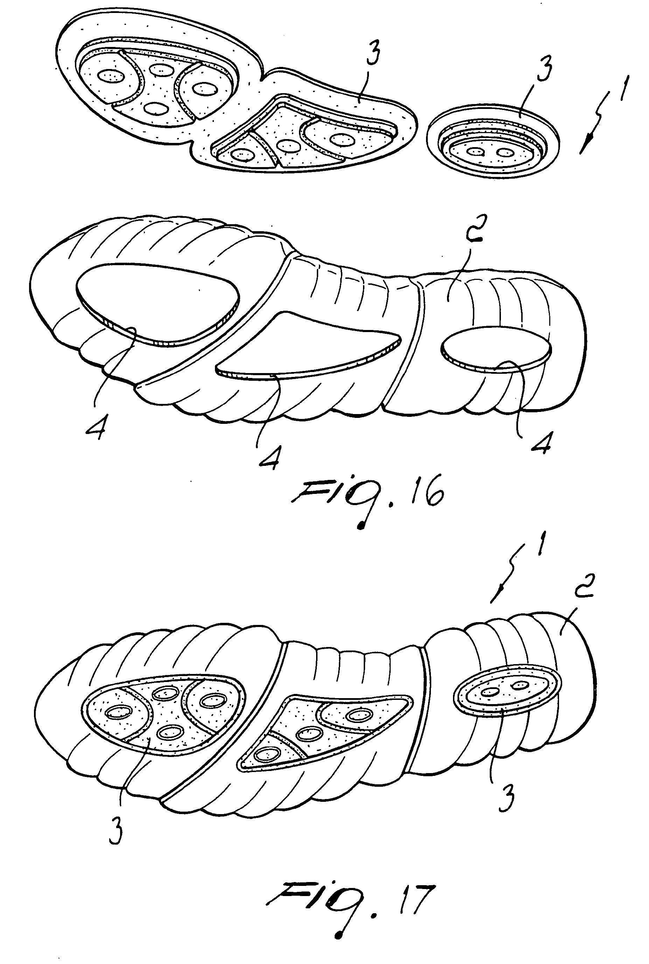

According to the invention, the base body 2 of the sole has at least one cutout 4, which can be arranged advantageously in any part of the base body 2, i.e., in the front and/or central and/or rear part of the sole base body 2 (as shown in Figure 10 or Figure 16), or can run substantially along the entire extension of the sole base body 2 (as shown in Figure 2). The cutout 4 can be provided for example directly during the molding of the sole base body 2 or can be provided by cutting or by means of any other system that is deemed more appropriate. Moreover, the cutout 4 can have a polygonal, oval, elliptical, circular shape or any other more appropriate shape.

Also according to the invention, the cutout 4 is closed at least partially by at least one multilayer sheet-like insert 3, which has, in its lower part intended to be directed toward the ground, a layer 5, which is made of rubber-like or similar material (for example an elastomer) and is provided with at least one through cutout 6 that passes through its thickness. In particular, such layer 5 is injection molded directly onto the remaining part of the multilayer sheet-like insert 3.

In this manner, the layer 5 effectively grips the remaining part of the multilayer sheet-like insert 3.

Merely by way of example, the layer 5 can be made of an elastomer, such as for example the material known by the trade-name APILON 3^{®}, manufactured by the Italian company API S.p.A. and substantially constituted by a thermoplastic polyurethane (TPU).

Advantageously, the layer 5 is provided with a plurality of through openings 6, which are distributed substantially along its entire extension and conveniently have an elongated transverse cross-section with walls that diverge toward the ground. In a possible embodiment, the layer 5 is affected by one or more surface grooves 5b.

It should be noted that if there are multiple cutouts 4 in the sole base body 2, each cutout is advantageously at least partially closed by at least one respective multilayer sheet-like insert 3.

In greater detail, in order to obtain the multilayer sheet-like insert 3, the layer 5, which in practice acts as an insole, is assembled by direct injection on a sandwich-like multilayer element 7.

Advantageously, the sandwich-like multilayer element 7 in turn comprises at least one temperature control layer 8, which is designed to stabilize the temperature of the foot inside the shoe by providing adequate thermal insulation.

Conveniently, the temperature control layer 8 is constituted by a fabric made of synthetic or natural hollow fibers. Merely by way of example, the hollow-fiber fabric marketed by the Italian company Tintotex and in particular the fabric known by the trade name Meryl Nexten^{®}, of the Nylstar company, has been found to be suitable for the purpose.

Advantageously, the sandwich-like multilayer element 7 further has at least one mechanical protection layer 9, which is designed to provide the multilayer sheet-like insert 3 with a valid mechanical strength, particularly resistance to abrasion, cutting, piercing and/or tearing. In particular, it is preferable to provide the mechanical protection layer 9 by means of a very fine mesh, which can be made of metal, carbon fiber or polyamide, such as for example the one manufactured by the Italian company Mosocca, or by means of a fabric made of aramid fiber or of any other suitable type.

In order to allow vapor permeation of the foot toward the outside of the shoe without compromising waterproofing of the sole according to the invention, the sandwich-like multilayer element 7 conveniently comprises at least one breathable and water-repellent layer 10, which is advantageously constituted by a microporous membrane, such as for example the membrane known commercially as Fit-Top^{®}, of the PDG company.

In order to ensure satisfactory comfort for the user's foot, the sandwich-like multilayer element 7 can advantageously also have one or more layers of padding 11, preferably constituted by a felt made of non-woven fabric.

It should also be added that the multilayer sheet-like insert 3 can be conveniently completed by a moisture absorption layer (not shown), which is located in its upper part, which is intended to be directed toward the foot and make contact therewith, and is constituted for example by a mesh made of vegetable fiber, such as cotton or the like, or synthetic fiber, such as polyester or other equivalent material.

The layers 8, 9, 10, 11 of the sandwich-like sheet element 7 are assembled to each other for example by mutual adhesive bonding on their peripheral portion or internally by spot gluing.

The arrangement of the layers 8, 9, 10, 11 within the thickness of the multilayer sheet-like insert may be any.

It is in any case preferable that the mechanical protection layer 9 be arranged adjacent to, or in contact with, the layer 5.

One possible arrangement of the layers 8, 9, 10, 11is shown in particular, merely by way of non-limiting example, in Figure 8.

Preferably, the multilayer sheet-like insert 3 is thinner than the sole base body 2 and conveniently has a shape that matches the shape of the corresponding cutout 4, so as to close it completely.

Advantageously, the sole according to the invention is obtained by separately providing the multilayer sheet-like insert 3 and the sole base body 2 and by then inserting the multilayer sheet-like insert 3 in a seat formed by a lip 13 arranged laterally with respect to the cutout 4, so that for example, the multilayer sheet-like insert 3 can close completely the free part thereof.

Conveniently, the peripheral portion 3a of the multilayer sheet-like insert 3 is joined intimately to the lip 13 formed on the sole base body 2 by adhesive bonding, vulcanization, electric welding of any type or another system deemed appropriate, so as to prevent water from infiltrating through the joints.

The sole base body 2 can also be provided, after providing the multilayer sheet-like insert 3, around the perimeter of the multilayer sheet-like insert 3 by injection molding.

The multilayer sheet-like insert 3 is arranged so as to remain, with respect to the ground contact part of the sole base body 2, at a higher level so as to not rest directly on the ground.

This allows, during walking, to obtain a cyclic deformation of the multilayer sheet-like insert 3 with a reciprocating motion along a direction that is substantially perpendicular to the plane of arrangement of the sole according to the invention, which generates a pumping effect that allows to draw air from the outside toward the inside of the shoe and to expel outwardly the perspiration of the foot from the inside of the shoe, thus facilitating foot breathing through the multilayer sheet-like insert 3 and particularly through the through openings 6 formed in the layer 5.

As can be seen in the figures, the layer 5 can have, for merely aesthetic reasons, a tab 5a that protrudes outwardly from the perimetric rim of the multilayer sheet-like insert 3 and is designed to be arranged on the external surface of a side of the shoe.

The individual characteristics described with reference to general teachings or to particular embodiments may all be present in other embodiments or may replace characteristics in those other embodiments.

The invention thus conceived is susceptible of numerous modifications and variations, all of which are within the scope of the appended claims.

In practice it has been observed that in all its embodiments, the invention has achieved its intended aim and objects, and in particular the fact is stressed that the invention provides a sole with lightweight and reduced rigidity characteristics that is at the same time very strong, ensuring better comfort and relief in walking for the foot.

Another important advantage of the invention occurs if the lower layer, intended to be directed toward the ground, of the or each multilayer sheet-like insert is made of an elastomer. This material in fact has the well-known property of returning to its original state (so-called "memory") after deformation. Therefore, during walking the lower layer of the multilayer sheet-like insert will tend to assume the shape of the foot, adapting to it, with an obvious improvement in shoe comfort, and then returns to its original shape once the shoe has been removed. This gives the sole according to the invention a considerable degree of nondeformability, regardless of the material of which its base body is made (rubber, leather, thermoresin or other), which after using the shoe resumes its original shape indeed due to the "return" of the elastomer that provides the lower layer directed toward the ground of the or each multilayer sheet-like insert.

In practice, the materials used, so long as they are compatible with the contingent use, as well as the shapes and dimensions, may be any according to requirements.

All the details may further be replaced with other technically equivalent elements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A sole for shoes, comprising a sole base body (2), wherein said sole base body (2) has at least one cutout (4) that is closed at least partially by at least one multilayer sheet-like insert (3), which has, in its lower part intended to be directed toward the ground, a layer (5) made of rubber-like material, which is injection molded directly onto the remaining part of said multilayer sheet-like insert (3),
said layer (5) of rubber-like material comprising at least one through opening (6),
*and* wherein said at least one multilayer sheet-like insert (3) is spaced upwardly with respect to the ground contact part of said sole base body (2), so as to not rest directly on the ground.

2. The sole for shoes according to one or more of the preceding claims, **characterized in that** said at least one multilayer sheet-like insert (3) can be insert ed in a seat that delimits said cutout (4).

3. The sole for shoes according to one or more of the preceding claims, **characterized in that** said at least one multilayer sheet-like insert (3) comprises at least one layer (8) for foot temperature control.

4. The sole for shoes according to claim 3, **characterized in that** said at least one temperature control layer (8) comprises a fabric made of hollow fiber.

5. The sole for shoes according to one or more of the preceding claims, **characterized in that** said at least one multilayer sheet-like insert (3) comprises at least one mechanical protection layer (9).

6. The sole for shoes according to claim 5, **characterized in that** said at least one mechanical protection layer (9) comprises a fine mesh.

7. The sole for shoes according to one or more of the preceding claims, **characterized in that** said at least one multilayer sheet-like insert (3) comprises at least one layer made of a water-repellent breathable membrane (10).

8. The sole for shoes according to one or more of the preceding claims, **characterized in that** said at least one multilayer sheet-like insert (3) comprises at least one layer of padding (11).

9. The sole for shoes according to claim 8*,* **characterized in that** said at least one padding layer (11) comprises a felt made of non-woven fabric.

10. The sole for shoes according to one or more of the preceding claims, **characterized in that** said at least one multilayer sheet-like insert (3) comprises, in its upper part intended to be directed toward the foot, a moisture absorption layer.

11. The sole for shoes according to **claim 10*,* characterized in that** said moisture absorption layer comprises a mesh made of vegetable or synthetic fiber.

12. The sole for shoes according to one or more of the preceding claims, **characterized in that** said sole base body (2) is made of die-cast material or of another suitable natural or synthetic material.

13. The sole for shoes according to one or more of the preceding claims, **characterized in that** said at least one cutout (4) lies at the substantially front and/or central and/or rear part of said sole base body (2) or along the extension of said sole base body (2).

14. The sole for shoes according to one or more of the preceding claims, **characterized in that** said at least one cutout (4) is provided directly during the process for molding said sole base body (2) either by cutting or by means of another system that is deemed appropriate.

15. The sole for shoes according to one or more of the preceding claims, **characterized in that** said at least one multilayer sheet-like insert (3) has a shape that corresponds to the shape of the respective cutout (4).

16. The sole for shoes according to one or more of the preceding claims, **characterized in that** said at least one multilayer sheet-like insert (3) is intimately joined to said sole base body (2), so as to be monolithic therewith, by adhesive bonding, vulcanization, electric welding or other means deemed appropriate.

## Patentansprüche

1. Schuhsohle, enthaltend einen Sohlenbasiskörper (2), wobei der genannte Sohlenbasiskörper (2) wenigstens einen Ausschnitt (4) hat, der wenigstens teilweise durch wenigstens eine mehrschichtige plattenförmige Einlage (3) verschlossen ist, welche mit ihrem unteren Teil, dazu bestimmt, dem Boden zugewandt zu sein, eine Lage (5) aus gummiähnlichem Material aufweist, welche direkt auf den verbleibenden Teil der genannten mehrschichtigen plattenförmigen Einlage (3) spritzgegossen ist, wobei die genannte Lage (5) aus gummiähnlichem Material wenigstens eine durchgehende Öffnung (6) enthält, und wobei die genannte, wenigstens eine mehrschichtige plattenförmige Einlage (3) im Verhältnis zu dem Kontaktteil des genannten Sohlenbasiskörpers (2) nach oben einen Abstand hat, so dass sie nicht direkt auf dem Boden aufliegt.

2. Schuhsohle nach dem vorstehenden Patentanspruch, **dadurch gekennzeichnet, dass** die genannte, wenigstens eine mehrschichtige plattenförmige Einlage (3) in einen Sitz eingesetzt werden kann, welcher den genannten Ausschnitt (4) abgrenzt.

3. Schuhsohle nach einem oder mehreren der vorstehenden Patentansprüche, **dadurch gekennzeichnet, dass** die genannte, wenigstens eine mehrschichtige plattenförmige Einlage (3) wenigstens eine Lage (8) zur Thermoregulierung des Fusses enthält.

4. Schuhsohle nach Patentanspruch 3, **dadurch gekennzeichnet, dass** die genannte, wenigstens eine Thermoregulier-Lage (8) eine Gewebe aus Hohlfasern enthält.

5. Schuhsohle nach einem oder mehreren der vorstehenden Patentansprüche, **dadurch gekennzeichnet, dass** die wenigstens eine mehrschichtige plattenförmige Einlage (3) wenigstens eine mechanische Schutzlage (9) enthält.

6. Schuhsohle nach Patentanspruch 5, **dadurch gekennzeichnet, dass** die genannte, wenigstens eine mechanische Schutzlage (9) ein feinmaschiges Netz enthält.

7. Schuhsohle nach einem oder mehreren der vorstehenden Patentansprüche, **dadurch gekennzeichnet, dass** die genannte, wenigstens eine mehrschichtige plattenförmige Einlage (3) wenigstens eine Lage enthält, die aus einer wasserabstossenden, atmungsaktiven Membrane (10) hergestellt ist.

8. Schuhsohle nach einem oder mehreren der vorstehenden Patentansprüche, **dadurch gekennzeichnet, dass** die genannte, wenigstens eine mehrschichtige plattenförmige Einlage (3) wenigstens eine Lage aus einem Polster (11) enthält.

9. Schuhsohle nach Patentanspruch 8, **dadurch gekennzeichnet, dass** die genannte, wenigstens eine Polsterlage (11) einen aus Vliesstoff hergestellten Filz enthält.

10. Schuhsohle nach einem oder mehreren der vorstehenden Patentansprüche, **dadurch gekennzeichnet, dass** die genannte, wenigstens eine mehrschichtige plattenförmige Einlage (3) in ihrem oberen Teil, welcher dem Fuss zugewandt ist, eine feuchtigkeitsaufnehmende Lage enthält.

11. Schuhsohle nach Patentanspruch 10, **dadurch gekennzeichnet, dass** die genannte feuchtigkeitsaufnehmende Lage ein Netz enthält, das aus pflanzlichen oder synthetischen Fasern hergestellt ist.

12. Schuhsohle nach einem oder mehreren der vorstehenden Patentansprüche, **dadurch gekennzeichnet, dass** der genannte Sohlenbasiskörper (2) aus Druckgussmaterial oder aus einem anderen geeigneten natürlichen oder synthetischen Material hergestellt ist.

13. Schuhsohle nach einem oder mehreren der vorstehenden Patentansprüche, **dadurch gekennzeichnet, dass** der genannte wenigstens eine Ausschnitt (4) in dem im wesentlichen vorderen und/oder mittleren und/oder hinteren Teil des genannten Sohlenbasiskörpers (2) liegt oder sich entlang dem genannten Sohlenbasiskörper (2) erstreckt.

14. Schuhsohle nach einem oder mehreren der vorstehenden Patentansprüche, **dadurch gekennzeichnet, dass** der genannte, wenigstens eine Ausschnitt (4) direkt während des Formverfahrens des genannten Sohlenbasiskörpers (2) entweder durch Ausschneiden oder mit Hilfe eines anderen entsprechend geeigneten Systems eingearbeitet wird.

15. Schuhsohle nach einem oder mehreren der vorstehenden Patentansprüche, **dadurch gekennzeichnet, dass** die genannte, wenigstens eine mehrschichtige plattenförmige Einlage (3) eine Form hat, die der Form des jeweiligen Ausschnittes (4) entspricht.

16. Schuhsohle nach einem oder mehreren der vorstehenden Patentansprüche, **dadurch gekennzeichnet, dass** die genannte, wenigstens eine mehrschichtige plattenförmige Einlage (3) eng mit dem genannten Sohlenbasiskörper (2) verbunden ist, so dass sie monolithisch mit diesem ist, und zwar durch Klebeverbindung, Vulkanisierung, elektrischer Verschweissung oder ähnlichen geeigneten Mitteln.

## Revendications

1. Une semelle pour chaussures, comprenant un corps de base (2) de semelle, **caractérisée en ce que** ledit corps de base (2) de semelle présente au moins un évidement (4) qui est fermé au moins partiellement par au moins un insert en feuille multicouche (3) qui présente, dans sa partie inférieure destinée à être orientée vers le sol, une couche (5) en matériau genre caoutchouc qui est moulée par injection directement sur la partie restante dudit insert en feuille multicouche (3), ladite couche (5) en matériau genre caoutchouc comprenant au moins une ouverture passante (6), et **caractérisée en ce que** ledit au moins un insert en feuille multicouche (3) est espacé vers le haut par rapport à la partie de contact avec le sol dudit corps de base (2) de semelle de manière à ne pas reposer directement sur le sol.

2. La semelle pour chaussures selon la revendication précédente, **caractérisée en ce que** ledit au moins un insert en feuille multicouche (3) peut être inséré dans un logement qui délimite ledit évidement (4).

3. La semelle pour chaussures selon une ou plusieurs des revendications précédentes, **caractérisée en ce que** ledit au moins un insert en feuille multicouche (3) comprend au moins une couche (8) pour la thermorégulation du pied.

4. La semelle pour chaussures selon la revendication 3, **caractérisée en ce que** ladite au moins une couche de thermorégulation (8) comprend un tissu réalisé en fibre creuse.

5. La semelle pour chaussures selon une ou plusieurs des revendications précédentes, **caractérisée en ce que** ledit au moins un insert en feuille multicouche (3) comprend au moins une couche (9) de protection mécanique.

6. La semelle pour chaussures selon la revendication 5, **caractérisée en ce que** ladite au moins une couche (9) de protection mécanique comprend un maillage fin.

7. La semelle pour chaussures selon une ou plusieurs des revendications précédentes, **caractérisée en ce que** ledit au moins un insert en feuille multicouche (3) comprend au moins une couche constituée d'une membrane transpirante hydrofuge (10).

8. La semelle pour chaussures selon une ou plusieurs des revendications précédentes, **caractérisée en ce que** ledit au moins un insert en feuille multicouche (3) comprend au moins une couche de rembourrage (11).

9. La semelle pour chaussures selon la revendication 8, **caractérisée en ce que** ladite au moins une couche de rembourrage (11) comprend un feutre réalisé en tissu non tissé.

10. La semelle pour chaussures selon une ou plusieurs des revendications précédentes, **caractérisée en ce que** ledit au moins un insert en feuille multicouche (3) comprend, dans sa partie supérieure destinée à être orientée vers le pied, une couche d'absorption de l'humidité.

11. La semelle pour chaussures selon la revendication 10, **caractérisée en ce que** ladite couche d'absorption de l'humidité comprend un maillage fait en fibre végétale ou synthétique.

12. La semelle pour chaussures selon une ou plusieurs des revendications précédentes, **caractérisée en ce que** ledit corps de base (2) de semelle est réalisé en matériau moulé sous pression ou autre matériau approprié de type naturel ou synthétique.

13. La semelle pour chaussures selon une ou plusieurs des revendications précédentes, **caractérisée en ce que** ledit au moins un évidement (4) s'étend au niveau de la partie essentiellement avant et/ou centrale et/ou arrière dudit corps de base (2) de semelle ou le long de l'extension dudit corps de base (2) de semelle.

14. La semelle pour chaussures selon une ou plusieurs des revendications précédentes, **caractérisée en ce que** ledit au moins un évidement (4) est réalisé directement durant le processus de moulage dudit corps de base (2) de semelle, soit par coupe soit au moyen d'un autre système jugé approprié.

15. La semelle pour chaussures selon une ou plusieurs des revendications précédentes, **caractérisée en ce que** ledit au moins un insert en feuille multicouche (3) a une forme qui correspond à la forme de l'évidement (4) respectif.

16. La semelle pour chaussures selon une ou plusieurs des revendications précédentes, **caractérisée en ce que** ledit au moins un insert en feuille multicouche (3) est étroitement uni audit corps de base (2) de semelle, afin de former un bloc avec celui-ci, par collage, vulcanisation, électrosoudage ou autres moyens jugés appropriés.
